# EUROPEAN PATENT SPECIFICATION

(11) **EP 1 107 547 B1**
(45) Date of publication and mention of the grant of the patent: **12.10.2005**
(21) Application number: 99440350.9
(22) Date of filing: 10.12.1999
(51) Int. Cl.: H04M 1/57

(54) **Universal CLIP detection method**
Universelles Verfahren zur Detektion der Anruferidentifizierungsinformation (CLIP)
Procédé universel de détection de la information d'identification de l'apellant (CLIP)

(43) Date of publication of application: 13.06.2001
(73) Proprietor: ALCATEL, 75008 Paris (FR)
(72) Inventor: Deshayes, Frederic, 67800 Bischheim (FR)
(74) Representative: Menzietti, Domenico

(56) References cited:
- EP-A- 0 878 943
- US-A- 5 754 635
- US-A- 5 844 975
- US-A- 5 905 786
- US-A- 5 963 627
- US-A- 5 970 128

## Description

The invention relates to a telecommunications device comprising
- an input for receiving a signaling signal comprising an identification signal preceded by a characteristic signal, and
- a detector coupled to said input for detecting said signaling signal while
- said detector contains a processing unit to process the said identification signal.

Such a telecommunications device, like a telephone or a facsimile apparatus, is for example known from EP878943. There is disclosed an analog telecommunications device, in which an identification signal with identification information of a caller like a caller line identification presentation (CLIP) is transmitted between the first and the second alert of an alerting signal to the telecommunications device of the person to be called. This telecommunications device comprises a detector for detecting a signaling signal preceded by said first alerting signal and comprising said identification signal.

The detector is made usually of a modem or half-modem connected to some processing unit. In the EP99440179.2 not yet published is affected to the processing unit a memory. There are stored different code definition signals corresponding to the alerting signal as defined by the different telecommunications operators, based on different standards. Under each standard like ETSI, UK-BT, UK-cable, US, is defined a different alerting signal. The telecommunications device disclosed in the EP99440179.2 can then be used under different standards by activating some selection mechanism which will chose the right code definition signal corresponding to the alerting signal used by the operator to which it is presently connected. The detection of an alerting signal serves to wake-up the detector which is usually in some idle mode of the telecommunications device so to be able to process any identification signal.

That said selection mechanism must be at least activated once so to ensure that the device will be able to detect the right alerting signal sent by the telecommunications operator. If said device shall be bought in some country covered by a specific standard different then where the device will be used afterwards, that said selection mechanism must be activated or automatically or easily by the user of the device himself.

The need of the said selection mechanism is a notable disadvantage of the telecommunications device as disclosed in EP99440179.2 since it may be the source of instability. On top of that it will be rather complicated to adapt such a telecommunications device to a new telecommunications operator which has defined a new alerting signal.

Document US-A-5 905 786 describes a device allowing the detection and processing of a caller-ID block inserted between first and second ring signals. The device activates the caller-ID decoding process after detection of a first ring signal.

It is an object of the invention to provide a telecommunications device as described in the preamble, which will detect the identification signal (CLIP) independently of the kind of the alerting signal sent to it.

This object is attained, according to the invention, by a telecommunications device as claimed in claim 1.

By taking advantage of the fact that any kind of signaling signal (CLIP) comprising an identification signal starts with a characteristic signal, the telecommunications device according to the invention is then setup with the said detector which is able to recognize that said characteristic signal. Furthermore, it is also taken advantage of the necessity for such detector containing a modem or half-modem to be supplied externally with electrical courant. Therefore, it is chosen to let the telecommunications device in a running like mode. It is then no more a necessity to wake-up such a device out of its idle mode. Only the said processing unit contained in the said detector which will process the signaling signal (CLIP) will be activated directly in dependence of the detection of said characteristic signal.

The invention is based on the insight, that the said characteristic signal is made of a similar set of data defined by a number of bits "0", "1", alternating one after the other, almost independently of the used standard. Therefore, to conceive a detector which will be able to detect an identification signal after receiving that said characteristic signal frees of adapting said telecommunications device to a specific standard, something which is very advantageous. Indeed the signaling signal (CLIP) has a structure independently of any standard. It is mostly made of a SMMR-signal, which corresponds to the said characteristic signal followed by a MARK-signal, usually a certain number of bit "1", succeeding one another, and finishing with a FRAME ID (identification signal) containing the said identification information. The whole CLIP-signal is usually sent using FSK modulation (frequency shift keying) although the present invention covers any other possible alternatives.

An embodiment of the telecommunications device according to the invention is characterized in that the detector comprising usually a modem or half-modem connected to a processing unit will be activated during a finite time interval, defined by said time interval, where it is able to process said identification signal. The time interval is defined by a timer which generates timing signals to operate the said detector accordingly.

The time interval is situated between two alerts and will only start after the reception of said characteristic signal. Its duration is limited in time such to ensure that the detector will no more be active to process identification signals when a second alerting signal is sent. The timer could be realized by using the timing software of a processor which is usually part of the processing unit.

Another embodiment of the telecommunications device is characterized in that parallel to the activation during said time interval of said detector to be able to process said identification signal, a predefined impedance is also activated. The telecommunications device operates then in a better defined way and is therefore suitable for use in large numbers, e.g. in a telecommunications network.

A further embodiment of the telecommunications device is advantageously characterized in that the detection of said characteristic signal by the detector will activate an alarming signal like a ringing signal or a flashing one. In that way it is still possible to notify the user of the telecommunications device of an incoming call while being free not to detect at all the alerting signal sent usually after the CLIP signal.

Further advantageous features of the invention are defined in the dependent claims and will become apparent from the following description and the drawings.

One embodiment of the invention will now be explained in more detail with reference to the accompanying drawing, in which:

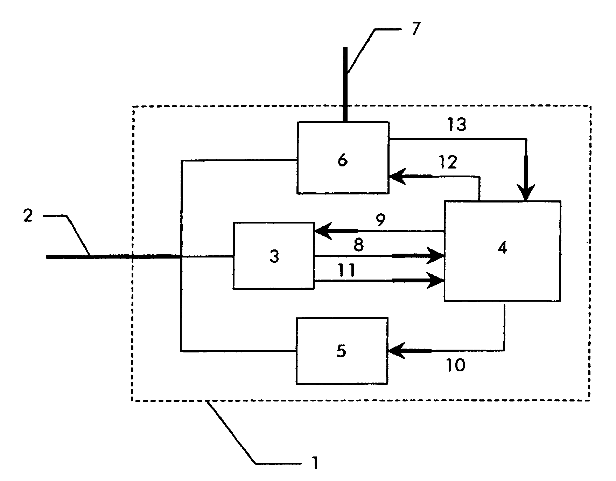

Figure 1 is a schematic of the detector of the telecommunications device according to the invention.

The telecommunications device shown schematically in figure 1 consists of an analog telecommunications device 1 connected to a public switched telephone network PSTN via a line 2.

The telecommunications device 1 comprises among other things a modem or half-modem 3. It plays the role of an input for the telecommunications device 1 with which analog signals sent via the line 2 are received and digitized. The modem 3 is connected with a processing unit 4 like a controller, mostly a microcontroller, which can be the central processing unit of the telecommunications device. The processing unit 4 is itself connected with a device 5 acting as a predefined impedance for the telecommunications device 1, and an interface 6 to which an handset may be connected. The device 1 is supplied over that interface 6 via an electrical cable 7 with electricity from an external power supply. Alternatives to supply the telecommunications device are conceivable.

Any signaling signals sent to the telecommunications device 1 over the PSTN line 2 by some operator will be detected by a detector inside that device 1. The detector is usually made of the modem 3 which will digitize the received signal and send it 8 to the processing unit 4, which may also be part of the detector. The processing unit 4 after a predefined procedure will compare that signal with the signals stored on some memory, possibly included in the processing unit 4. If the received signal is a characteristic signal made of a number of bits "0", "1" alternating one after the other then the processing unit 4 will recognize that signal as being part of a signaling signal more precisely as being the first part of that signal.

The processing unit 4 all the time in a running mode, will then be ready, in a preferred embodiment for a finite time interval, to process an identification signal which shall follow that characteristic signal. It will first acknowledge it 9 to the modem 3. It may also activate 10 the predefined impedance 5 such that the telecommunications device 1 is at a different impedance (lower/higher) during the time of reception of the identification signal. This time shall coincide with the said time interval.

In the said time interval, the detector will try to detect the identification signal. After reception by the modem 3 of the identification signal which advantageously shall contain identification information of a caller like in the case of a CLIP, the processing unit 4 will receive 11 that identification information digitized. It will then be able to process that information so to show it the caller e.g. onto a display. It may also be able to transfer 12 that digitized information to the handset via the interface 6. This would make it possible to broadcast the information contained in the CLIP. A control over the processing unit 4 could be performed by the user of the telecommunications device via the handset 13.

The processing unit will stop to be ready to process an identification signal after the said time interval will be over. This may be defined by the reception from the detector of a closing signal at the end of the identification signal. In that way, it is ensure that the processing unit 4 is not expecting an identification signal at any time which could cause wrong detection of an identification signal. In the same way the predefined impedance 5 may be deactivated at the end of said time interval.

Usually the signaling signal (CLIP) is sent as a frequency shift keying signal. In that case, the characteristic signal is called a SMMR-signal and is usually followed by a mark signal. Latter is made of a number of bits "1" succeeding one another. The real information will then be send as an identification signal following the mark signal.

Since most of the telecommunications devices able to detect a CLIP-signal contain inevitably a modem or half-modem (codec), they are supplied externally with electric power. Therefore they do not need the electric power usually sent by the operator with the alerting signal to wake up. The detector contained in such a telecommunications device and comprising the modem or half-modem, will be ready - running mode - at any time to detect a signal. An advantageous embodiment of a telecommunications device according to the invention would then be to free that device of detecting any alerting signal. In that case an alarming signal would have to be activated in parallel with the detection of a CLIP-signal. That alarming signal would then play the role of the ringing signal and notify the caller of an incoming call. It could be noticeable through a ringing bell or a flashing light.

In an alternative embodiment according to the present invention, it is possible to consider the detector as an independent device which must be connected to an analog telecommunications device. Such independent device could then be used to give the possibility still to use a plain old telephone POT, while ensuring the advantageously service of the detection and the processing of CLIP-signals.

## Claims

1. Telecommunications device (1) comprising
• an input (2) for receiving a signaling signal comprising an identification signal preceded by a characteristic signal, and
• a detector coupled to said input for detecting said signaling signal, while
• said detector contains a processing unit (4) to process said identification signal,
**characterized in that**
said detector is all the time in a running mode, while such process is activated in dependence of the detection by the said processing unit of said characteristic signal which is made as a set of a certain number of bits "0", "1", alternating one after the other.

2. Telecommunications device according to claim 1, **characterized in that** said detector comprises a timer activating said processing unit (4) to process the said signaling signal during a time interval.

3. Telecommunications device according to claim 2, **characterized in that** said detector comprises a predefined impedance (5) which is activated by said timer during said time interval, said predefined impedance being deactivated afterwards.

4. Telecommunications device according to claim 2, **characterized in that** said time interval is limited by the reception of a closing signal which is part of the signaling signal.

5. Telecommunications device according to claim 2, **characterized in that** said time interval starts after the reception of a predefined number N of couples of alternating bits of the said characteristic signal.

6. Telecommunications device according to claim 1, **characterized in that** said detector detects said signaling signal as a frequency shift keying signal.

7. Telecommunications device according to claim 1, **characterized in that** said detector detects a caller identification signal as said signaling signal.

8. Telecommunications device according to claim 1, **characterized in that** the detector contains means to activate an alarming signal in dependence of detecting said characteristic signal, to notify of an incoming call.

## Patentansprüche

1. Telekommunikationsvorrichtung (1), die folgendes umfasst:
• Einen Eingang (2) zum Empfang eines Signalisierungs-Signals, das ein Identifikations-Signal enthält, dem ein charakteristisches Signal vorausgeht, und
• Einen Detektor, der mit dem Eingang gekoppelt ist, um das Signalisierungs-Signal zu erkennen,
wobei
• der Detektor eine Verarbeitungseinheit (4) zur Verarbeitung des Identifikations-Signals enthält,
**dadurch gekennzeichnet, dass**
sich der Detektor ständig in Betrieb befindet, während ein solcher Prozess in Abhängigkeit davon aktiviert wird, dass die Verarbeitungseinheit das charakteristische Signal erkennt, das als ein Satz aus einer bestimmten Anzahl von Bits "0", "1" aufgebaut ist, die nacheinander abwechseln.

2. Telekommunikationsvorrichtung gemäß Anspruch 1, **dadurch gekennzeichnet, dass** der Detektor einen Zeitgeber enthält, der die Verarbeitungseinheit (4) aktiviert, um während eines Zeitintervalls das Signalisierungs-Signal zu verarbeiten.

3. Telekommunikationsvorrichtung gemäß Anspruch 2, **dadurch gekennzeichnet, dass** der Detektor eine vorher festgelegte Impedanz (5) enthält, die von dem Zeitgeber während des Zeitintervalls aktiviert wird und wobei die vorher festgelegte Impedanz anschließend deaktiviert wird.

4. Telekommunikationsvorrichtung gemäß Anspruch 2, **dadurch gekennzeichnet, dass** das Zeitintervall durch den Empfang eines Schlusssignals begrenzt ist, das Teil des Signalisierungs-Signals ist.

5. Telekommunikationsvorrichtung gemäß Anspruch 2, **dadurch gekennzeichnet, dass** das Zeitintervall nach dem Empfang einer vorher festgelegten Anzahl N von Paaren abwechselnder Bits des charakteristischen Signals beginnt.

6. Telekommunikationsvorrichtung gemäß Anspruch 1, **dadurch gekennzeichnet, dass** der Detektor das Signalisierungs-Signal als ein Signal mit Frequenzumtastung (Frequency Shift Keying, FSK) erkennt.

7. Telekommunikationsvorrichtung gemäß Anspruch 1, **dadurch gekennzeichnet, dass** der Detektor ein Anruferidentifizierungssignal als das Signalisierungs-Signal erkennt.

8. Telekommunikationsvorrichtung gemäß Anspruch 1, **dadurch gekennzeichnet, dass** der Detektor Mittel enthält, um in Abhängigkeit von der Erkennung des charakteristischen Signals ein Alarmsignal zu aktivieren, um einen eintreffenden Anruf zu melden.

## Revendications

1. Appareil de télécommunications (1) comprenant
• une entrée (2) servant à recevoir un signal de signalisation comprenant un signal d'identification précédé d'un signal caractéristique, et
• un détecteur couplé à ladite entrée pour détecter ledit signal de signalisation tandis que
• ledit détecteur contient une unité de traitement (4) destinée à traiter ledit signal d'identification,
**caractérisé en ce que**
ledit détecteur est en permanence sur un mode de fonctionnement tandis qu'un tel traitement est activé en fonction de la détection par ladite unité de traitement dudit signal caractéristique qui est constitué comme un ensemble d'un certain nombre de bits "0" et "1", alternant l'un après l'autre.

2. Appareil de télécommunications selon la revendication 1, **caractérisé en ce que** ledit détecteur comprend un temporisateur activant ladite unité de traitement (4) pour qu'elle traite ledit signal de signalisation pendant un intervalle de temps.

3. Appareil de télécommunications selon la revendication 2, **caractérisé en ce que** ledit détecteur comprend une impédance prédéfinie (5) qui est activée par ledit temporisateur pendant ledit intervalle de temps, ladite impédance prédéfinie étant désactivée par la suite.

4. Appareil de télécommunications selon la revendication 2, **caractérisé en ce que** ledit intervalle de temps est limité par la réception d'un signal de fermeture qui fait partie du signal de signalisation.

5. Appareil de télécommunications selon la revendication 2, **caractérisé en ce que** ledit intervalle de temps commence après la réception d'un nombre prédéfini N de couples de bits alternés dudit signal caractéristique.

6. Appareil de télécommunications selon la revendication 1, **caractérisé en ce que** ledit détecteur détecte ledit signal de signalisation comme un signal de modulation par déplacement de fréquence.

7. Appareil de télécommunications selon la revendication 1, **caractérisé en ce que** ledit détecteur détecte un signal d'identification de l'appelant comme étant ledit signal de signalisation.

8. Appareil de télécommunications selon la revendication 1, **caractérisé en ce que** le détecteur contient un moyen pour activer un signal d'alarme en rapport avec la détection dudit signal caractéristique pour signaler un appel entrant.
